# EUROPEAN PATENT APPLICATION

(11) **EP 1 958 796 A2**
(43) Date of publication of application: **20.08.2008**
(21) Application number: 07012912.7
(22) Date of filing: 02.07.2007
(51) Int. Cl.: B60C 23/04

(54) **Tire**

(30) Priority: 13.02.2007 JP 2007031774
(71) Applicant: Mitomo Corporation, Yokohama-shi, Kanagawa (JP)
(72) Inventor: Kaga, Kikuo, Tokyo (JP); Ashizawa, Shigeo, Tokyo (JP); Kano, Yasuo, Tokyo (JP)
(74) Representative: Nunnenkamp, Jörg

(57) **Abstract**

An object of the present invention is to provide a tire which can record and read data per tire including type, serial number, specification, manufacture date, and use history at each step of manufacture, distribution and maintenance.

The tire 1 comprises a first wireless IC tag 3 provided inside the tire and can write/read information by radio communication, and a second wireless IC tag 4 which can write information at the steps of manufacturing the tire and distributing the tire by radio communication and read this written information by radio communication and which is traceable for manufacture control and distribution control, a tire condition detecting sensor 5 also provided inside the tire and detecting at least one among temperature, rotation, oscillation, stress and pressure which are applied to the tire, and a control section 6 provided inside the carcass structure 2 of the tire and sending the data detected by the tire condition detecting sensor to the first wireless IC tag 3 for recording.

## Description

### BACKGROUND OF THE INVENTION

### 1. FIELD OF THE INVENTION

The present invention relates to a tire used for vehicles such as automobiles, which can highly reliably and easily confirm data per tire including type, serial number, specification, manufacture date, and use history in each step of manufacture, distribution, and maintenance.

### 2. PRIOR ART

With regard to tires for vehicles such as automobiles, data including type, serial number, specification, and use history should be recorded for managing manufacture, distribution, maintenance, etc. from viewpoint of the Product Reliability Law as well. Then attaching barcode labels recording inherent information per tire including type, serial number, and specification (e.g. Patent Reference 1) was proposed by the tire manufacturer. However, information amount recorded by the barcode is little and there was a problem that barcode labels may be removed from tires under the sever use environment of tires subject to oscillation, deformation and thermal change. And information can not be additionally recorded in steps of distribution, maintenance, etc. either.

Therefore, a method of recording manufacturing control information on IC tags instead of barcode labels and attaching these on tires (e.g. Patent Reference 2) was proposed by the tire manufacturer.
[Patent Reference 1] Japanese Published Unexamined Patent Application No. H07-266811
[Patent Reference 2] Japanese Published Unexamined Patent Application No. 2005-316596

With regard to the conventional tire attached with IC tags as mentioned above, amount of recordable information remarkably increases and there is no problem a recording medium is removed from the tire. However, although this conventional tire attached with the IC tag can be used as traceability for control of tire manufacturing and distribution, this tire could not be recorded with use environment such as driving time, travel distance, tire rotation speed, shock, and temperature increase, thereby maintenance control by recording important use history for the tire could not be performed.

### SUMMARY OF THE INVENTION

Therefore, to solve these problems, it is an object of the present invention is to provide a tire which can record and read data per tire including type, serial number, specification, manufacture date, and use history and read at each step of manufacture, distribution and maintenance.

### BRIEF DESCRIPTION OF THE DRAWING

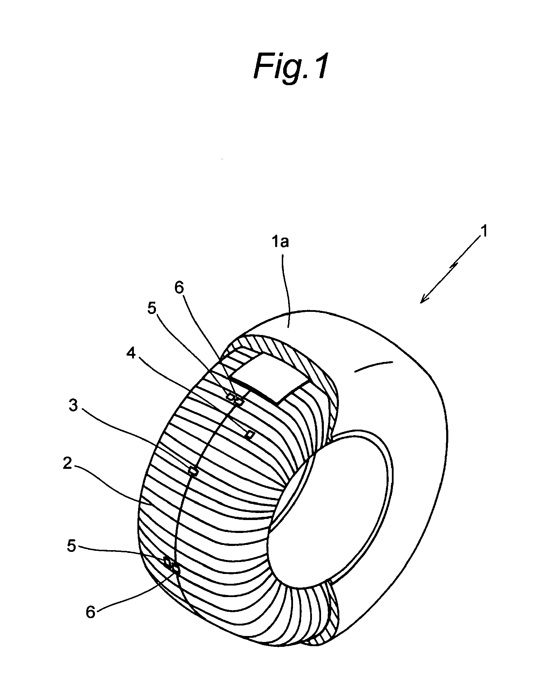

Fig. 1 is a schematic perspective diagram cutting a part of a tire of the present invention.

### DETAILED DESCRIPTION OF THE PREFERRED EMBODIMEMNTS

Fig. 1 shows a tire using a wireless IC tag of the present invention. The tire 1 comprises a carcass structure 2 which is provided inside a tread 1a formed of rubber and which is to be a frame of the tire formed of cord of polyester, rayon, aramid, steel, etc., and the carcass structure 2 comprises a first wireless IC tag 3, a second wireless IC tag 4, a single or plural tire condition detecting sensors 5 and a control section 6 connected to the tire condition detecting sensor 5. These first wireless IC tag 3 and second wireless IC tag 4 are approximately 1mm or less, and they are covered with rubber together with the carcass structure 2 or integrally provided inside the cord forming the carcass structure 2.

The first wireless IC tag 3 comprises inside the smaller diameter a FeRAM which is a nonvolatile ferroelectric memory, a power section which receives outside radio wave instead of fitting a driving cell inside and resonates with this to generate electric current, and an antenna which radio communicates with the outside. The first wireless IC tag 3 is wirelessly or wiredly circuit connected with the tire condition detecting sensor 5 which is provided in the carcass structure 2 of the tire 1 and which detects at least one among temperature, rotation, oscillation, stress, and pressure (including air pressure in the tire) and the control section 6 comprising a time data generator. And the control section 6 which puts time data on the signal from the tire condition detecting sensor 5 has a function to send to the first wireless IC tag 3 for recording. As for a temperature sensor and a stress/pressure sensor among the tire condition detecting sensors 5, conventional sensors may be used, as for a rotation sensor, centrifugal force generated when tires rotates is detected by the stress/pressure sensor and can be computed to a rotation speed per hour by the control section 6, and the oscillation sensor can detect by setting the stress/pressure sensor in the desired direction.

Besides recording signals of the tire condition detecting sensor 5 which are sent from the control section 6, the first wireless IC tag 3 uses radio waves of megahertz band to radio communicate with an outside writing/reading device (not shown) within a range of several meters (not like a second wireless IC tag for traceability described later, range of radio communication distance may be short because recorded information is individually read per tire). And since signals used for the radio communication are encoded so as not to write and read by other than devices preset to decode, information is securely controlled. Further, since FeRAM is writable at DC 1.1V of low voltage, even a passive type which comprises a power section generating electricity by resonating with outside radio waves without installing cells inside the first wireless IC tag 3 is well enough. And the FeRAM has writing speed 5000 times of the speed of EEPROM used in the conventional IC tag. And with regard to rewriting frequency, the FeRAM has an excellent performance of trillion times while EEPROM has a performance of about a hundred thousand times. With regard to rewriting access, the FeRAM can advantageously perform at random by words while the conventional EEPROM and flash memory perform by blocks. The control section for controlling writing to the FeRAM is set so as to add but not to overwrite to prevent information once written from being deleted/renewed.

Further, the second wireless IC tag 4 is configured in such that information is writable and readable with the outside by radio communication independently without connection with the above mentioned tire condition sensor 5. And it is used for traceability with which information such as type, serial number, manufacture date, and specification is recorded and stored per tire with the IC tag writing device for product control and distribution control in the stages of manufacturers and distribution.

In this second wireless IC tag 4, radio wave band of radio communication is set at low frequency of kilohertz so that distance of the second wireless IC tag 4 radio-communicable with and the IC tag writing device and the IC tag reading device is set to about 10 meters which is longer than that of the first wireless IC tag 3. And since signals used for this radio communication are encoded so as not to write and read by other than devices preset to decode, information is securely controlled. The above mentioned FeRAM may be used as a recording medium for the second wireless IC tag 4.

With the tire 1 having this configuration, the first wireless IC tag and the second wireless IC tag of initial state are first prepared in the manufacturer, these are mixed in cord material to form cord in the cord manufacturing step, and this cord forms a carcass structure 2. And the tire condition detecting sensor 5 and the control section 6 are integrally arranged with the carcass structure 2 at the same time, then they are formed as a tire, and information per tire of manufacturing process, type, serial number, specification, and manufacture date are appropriately recorded to the second wireless IC tag 4 using the writing device. The manufacturing information written in the second wireless IC tag 4 is also recorded in a central control server (not shown) for centrally controlling a tire quality control system to link date.

The tire 1 manufactured in such manner is distributed as an independent tire in the market, or mounted on vehicles such as automobiles, and delivery information and others can be recorded in the second wireless IC tag 4 at each distribution step.

And when users drive the automobile mounted with this tire 1, the above mentioned tire condition detecting sensor 5 appropriately detects temperature, rotation, oscillation, stress, and pressure applied to the tire and sends these to the control section 6, and the control section 6 makes the first wireless IC tag 3 record these data together with time data automatically at regular time intervals for example, or record the data together with the detection time data when the tire condition detecting sensor 5 detects abnormal data applied to the tire. The information recorded in this first wireless IC tag 3 can be read by putting the IC tag reading device closer to the individual tire.

In the above mentioned embodiment, although FeRAM of nonvolatile ferroelectric memory is explained as one example of memory devices applying the present invention, the memory device is not limited to this but may be memory devices having nonvolatile function formed of semiconductor materials.

According to the above mentioned configuration, the tire comprises a wireless IC tag provided inside the tire and information-writable/readable by radio communication; a tire condition detecting sensor also provided inside the tire, and a control section also provided inside the tire and sending data detected by the tire condition detecting sensor to the wireless IC tag for recording; wherein use history can be automatically recorded to the wireless IC tag inside the tire and the use history recorded in the wireless IC tag can be easily read, thereby maintenance control of the tire can be secured.

Further, the tire condition detecting sensor has a function to detect at least one among temperature, rotation, oscillation, stress and pressure which are applied to the tire, thereby necessary data for tire maintenance can be obtained.

Further, the wireless IC tag, the tire condition detecting sensor, and the control section are provided in the carcass structure forming the tire, wherein the wireless IC tag, the tire condition detecting sensor, and the control section are integrated with the robust carcass structure, thereby they are durable for longtime without removing from the tire under sever use environment.

Further, the wireless IC tag is provided inside the cord forming the carcass structure, thereby the wireless tag is not possibly removed from the tire with information recorded even if the tire is broken by any chance.

Further, the wireless IC tag is radio communicated by encoded signals with the IC tag writing device and the IC reading device and writing/reading can not be performed other than the preset devices, thereby information can be securely controlled.

Further, the wireless IC tag uses the memory device formed of semiconductor and the like and having nonvolatile function, thereby the tag can be read at high speed and can be easily used with low voltage drive and low power consumption.

Further, the control section sends and records signals detected by the tire condition detecting sensor to the wireless IC tag together with time data, thereby use history to be recorded can be made responsive to time.

Further, information at the steps of manufacturing tire and distributing tire can be written by radio communication, and the wireless IC tag can read this written information by radio communication and can trace for manufacture control and distribution control is provided separately, thereby manufacture control and distribution control can be performed securely.

## Claims

1. A tire comprising a wireless IC tag provided inside the tire and information-writable/readable by radio communication, a tire condition detecting sensor also provided inside said tire, and a control section also provided inside said tire and sending data detected by said tire condition detecting sensor to the wireless IC tag for recording.

2. The tire according to Claim 1, wherein the tire condition detecting sensor has a function to detect at least one among temperature, rotation, oscillation, stress and pressure which are applied to the tire.

3. The tire according to Claims 1 and 2, wherein the wireless IC tag, the tire condition detecting sensor, and the control section are provided in a carcass structure forming the tire.

4. The tire according to Claim 3, wherein the wireless IC tag is provided inside a cord forming the carcass structure.

5. The tire according to Claim 1 to 4, wherein the wireless IC tag can radio communicate with an IC tag writing device and an IC reading device by encoded signals.

6. The tire according to Claim 1 to 5, wherein the wireless IC tag uses a memory device formed of semiconductor material and the like and having nonvolatile function.

7. The tire according to Claim 1 to 6, wherein the control section sends signals detected by the tire condition detecting sensor to the wireless IC tag together with time data.

8. The tire according to Claim 1 to 7, wherein a wireless IC tag is provided separately, and said wireless IC tag can write information at steps of manufacturing tire and distributing tire by radio communication, read the written information by radio communication, and is traceable for manufacture control and distribution control.
